# EUROPEAN PATENT SPECIFICATION

(11) **EP 3 669 148 B1**
(45) Date of publication and mention of the grant of the patent: **01.04.2026**
(21) Application number: 18758686.2
(22) Date of filing: 08.08.2018
(51) Int. Cl.: G01F 1/68, G01F 1/684, G01F 1/696

(54) **DETECTING FLUID FLOW**
DURCHFLUSSDETEKTION
DÉTECTION D'ÉCOULEMENT D'UN FLUIDE

(30) Priority: 14.08.2017 GB 201713028; 25.08.2017 US 201762550521 P; 15.03.2018 GB 201804160
(43) Date of publication of application: 24.06.2020
(73) Proprietor: Anglian Water Business (National) Limited, Durham DH1 5FJ (GB)
(72) Inventor: PEACE, Jonathan Elliot, Camberley, Surrey GU17 9JH (GB); PAYNE, Colin, Camberley, Surrey GU17 9JH (GB)
(74) Representative: Reddie & Grose LLP
(86) International application number: PCT/GB2018/052260
(87) International publication number: WO 2019/034846

(56) References cited:
- FR-A1- 2 763 665
- GB-A- 2 546 126
- US-A1- 2013 276 549
- US-A1- 2014 373 639
- M. HASANVAND ET AL: "Predicting Oil Flow Rate due to Multiphase Flow Meter by Using an Artificial Neural Network", ENERGY SOURCES. PART A. RECOVERY, UTILIZATION, AND ENVIRONMENTAL EFFECTS, vol. 37, no. 8, 11 March 2015 (2015-03-11), pages 840 - 845, XP055522321, ISSN: 1556-7036, DOI: 10.1080/15567036.2011.590865
- LAMMERINK T S J ET AL: "Intelligent gas-mixture flow sensor", SENSORS AND ACTUATORS A: PHYSICAL, ELSEVIER BV, NL, vol. 47, no. 1-3, 1 March 1995 (1995-03-01), pages 380 - 384, XP027220172, ISSN: 0924-4247, [retrieved on 19950301]

## Description

The present invention relates in general to techniques for detecting flow of fluid in a conduit, and in particular but not exclusively to techniques for estimating the rate of flow of liquids such as water in pipes. Non-exclusive embodiments of the invention may provide an end-user installable, low-power, integrated fluid flow rate monitoring and alerting system.

Water is becoming an increasingly valuable commodity, and hence the need for measuring its use is also of increasing importance worldwide. Furthermore, water damage, particularly in buildings, is an expensive problem that can be mitigated by the early warning of leaks. In addition, health issues relating to stationary water in pipes, leading for example to Legionnaires disease, result in tens of thousands of hospitalizations and numerous fatalities worldwide every year, and the associated suffering and costs can be mitigated by the use of widespread water temperature and flow sensing.

Traditional water flow sensors require the insertion of a flow detection device, such as a turbine, in line with the pipe through which the flow is to be measured. However, such devices tend to be expensive to install, and may interfere with the fluid flow. Alternatively non-invasive techniques, such as ultrasound and magnetic resonance, may be used to infer the rate of fluid flow. However such techniques require a source of electrical power and tend to be expensive in terms of either cost, or energy usage, or both.

GB 2546126 discloses a fluid flow detection device for detecting flow in a building water supply system. The device comprises a temperature sensor in contact with a pipe, an ambient temperature sensor, and an electronic control unit. The control unit is programmed to monitor changes measured by the temperature sensors. If the temperature difference is higher than a threshold for greater than a predetermined period of time, then there is usually flow in the pipe indicating a leak.

US 2013/276549 discloses an apparatus for measuring a flow rate through an oil or gas pipeline. The apparatus comprises a first temperature sensor for sensing the temperature of the pipeline, a second temperature sensor for sensing ambient temperature, and a calculation unit which determines the difference between the two temperatures. Flow rate in the conduit is calculated based on the difference between the two temperatures.

Hasanvand et al: "Predicting Oil Flow Rate due to Multiphase Flow Meter by Using an Artificial Neural Network", Energy Sources, Part A: Recovery, Utilization and Environmental Effects, vol. 37, no. 8, 11 March 2015, pages 840-845, discloses a technique for predicting oil flow rate from a reservoir in the production phase of an oil well. Temperature and pressure are detected by sensors in the oil well. An artificial neural network is trained using temperature and pressure as inputs. Temperature and pressure are set as inputs to the network, and oil flow rate as the output.

Lammerink et al: "Intelligent gas-mixture flow sensor", Sensors and Actuators A 46-47 (1995) 380-384, discloses a gas flow sensor which determines the mass flow and the mixture content of the gas by combining the output signals of two different types of flow sensor in an artificial neural network. The first type of flow sensor comprises three resistors crossing the flow channel. The second type of flow sensor comprises two resistors in the flow channel.

US 2014/0373639 discloses a mass flow meter comprising a driving mechanism for inducing motion in a conduit, and a motion sensor for sensing the induced motion. Mass flow is calculated based on the induced motion. Temperature may also be measured and used to correct for properties such as stiffness and dimensions. The conduit is designed to be inserted in a pipeline.

According to one aspect of the present invention there is provided apparatus for detecting flow of a fluid in a conduit as defined by claim 1.

Preferred features of the invention are recited in the dependent claims.

The present invention may provide the advantage that, by providing means for inferring the flow of fluid based on a change in the temperature of the conduit over time, an estimate of the flow of fluid in the conduit may be obtained using a low-cost, low-power and/or non-invasive device.

The means for inferring the flow of fluid comprises a neural network model. A neural network model may allow the flow of fluid to be inferred from complex patterns of temperature change, in a way which would be difficult to achieve with a conventional algorithm. Thus by using a neural network model, a more accurate estimate of the rate of flow may be obtained.

The neural network model is preferably pre-trained on reference data. For example, the neural network model may be pre-trained with data extracted from existing temperature sensors, together with actual flow data. The actual flow data may be obtained, for example, from traditional invasive flow sensors.

In one embodiment the neural network model is a Recursive Neural Network (RNN), or a Long Short-Term Memory (LSTM) neural network. However other neural network models such as a feed-forward neural network or a Convolutional Neural Network may be used instead.

The apparatus may be arranged to obtain continuous temperature data, for example from a temperature sensor. In this case the apparatus may be arranged to execute a sliding window algorithm which slides over continuous temperature data and feeds slices of the data to the neural network model. The neural network model may then detect flow rate from the temperature slices.

In any of the above arrangements, the means for inferring the flow of fluid may be arranged to infer the flow of fluid based further on at least one other environmental parameter (in addition to temperature of the conduit and sensed sound in the conduit). For example, the other environmental parameter may be at least one of: ambient temperature; motion of the conduit; ambient temperature adjacent to the apparatus; vibration of the conduit; and electromagnetic radiation emitted by the conduit. The or each other environmental parameter may be fed as an input to the neural network model which is used to infer fluid flow, in additional to the temperature of the conduit and sensed sound in the conduit. This may allow the flow of fluid in the conduit to be determined more reliably.

This embodiment may provide the advantage that, by providing means for inferring the flow of fluid based on a change in the temperature of the conduit over time, combined with one or more other environmental factors, an estimate of the flow of fluid in the conduit may be obtained using a low-cost, low-power and/or non-invasive device.

In one embodiment, a neural network model takes a plurality of disparate sensor inputs, such as conduit temperature, vibration, sound, electromagnetic radiation, resistivity, self-capacitance, conduit diameter, ambient temperature; and from those inputs synthesises a sensor output, thus creating a "Virtual Sensor", in this case producing a measure of fluid flow.

In any of the above arrangements, the means for inferring the flow of fluid may be arranged to infer the flow of fluid based further on at least one parameter of the conduit. For example, the parameter of the conduit may be at least one of (electrical) resistivity of the conduit, size of the conduit, heat conductivity of the conduit, and conduit material.

The means for sensing temperature may comprise any suitable type of temperature sensor, for example, an electrical temperature sensor such as a thermistor, a thermocouple, a resistance thermometer, or a silicon bandgap temperature sensor.

The means for sensing a temperature of the conduit is provided in a sensor device arranged for attachment to the conduit. For example, a temperature sensor may be arranged to contact the conduit when the device is attached to the conduit. The sensor device may be user installable, and may be attachable to pipes which are already in place. This may allow the sensor device to be used in environments such as buildings where it is desired to monitor the flow of liquids such as water in pipes.

The means for sensing a temperature of the conduit may comprise a plurality of temperature sensors. The plurality of temperature sensors may be provided in the sensor device, and may be arranged to contact the conduit when the device is attached to the conduit. This may provide at least one of the following benefits: providing temperature sensor redundancy; allowing a means of self-calibration by comparing the temperatures recorded by each temperature sensor; improving the accuracy of the temperature reading by calculating the average temperature recorded by each temperature sensor; or improving the accuracy of the calculation of flow by spacing the temperature sensors along the conduit and comparing the temperatures of each sensor over time.

The means for sensing temperature may comprise a temperature sensor connected to a processor. In order to save power, the processor may be arranged to sleep when there is no change in temperature, and the temperature sensor may be arranged to wake up the processor when a change in temperature above a predetermined threshold is detected.

In one embodiment, the means for sensing temperature comprises means for sensing electromagnetic radiation. For example, the means for sensing temperature may be arranged to detect infrared radiation. In this case, the sensor may have a particular focus on the infrared part of the spectrum, for example with wavelengths ranging between 700 nanometres (nm) to 1 mm, although other wavelength ranges may be used instead. The measurement of infrared radiation emitted by the conduit may provide a more accurate reading of the temperature of the conduit than can be achieved with alternative temperature sensors; similarly the measurement of infrared radiation emitted by the conduit may provide a greater degree of temperature reading precision than can be achieved with alternative temperature sensors; additionally, the measurement of infrared radiation emitted by the conduit may provide a more instantaneous reading of the temperature of the conduit than can be achieved with alternative temperature sensors; also, the measurement of infrared radiation emitted by the conduit does not require physical contact with the conduit, and therefore may provide a more flexible manufacturing arrangement than can be achieved with alternative temperature sensors. Thus, electromagnetic radiation data produced by the means for sensing electromagnetic radiation may be used to infer the flow of fluid, in place of, or in addition to, temperature data provided by other temperature sensors.

The means for detecting infrared radiation may comprise any type of detector that reacts to infrared radiation, such as a thermal detector or a photodetector such as a photodiode or a photo transistor.

The apparatus may further comprise means for sensing at least one other environmental parameter, and the means for inferring the flow of fluid may be arranged to infer the flow of fluid based further on the sensed environmental parameter. This may allow the flow of fluid in the conduit to be determined more reliably.

The means for sensing at least one other environmental parameter may be connected to a processor, and the means for sensing at least one other environmental parameter may be arranged to wake up the processor when a change in that parameter is detected. This may save power and prolong the life of the sensor device.

For example, the means for sensing at least one other environmental parameter may comprise a temperature sensor for sensing ambient temperature. The sensed ambient temperature may be the temperature in the vicinity of the conduit. This may allow changes in the ambient temperature to be taken into account when inferring the flow of fluid, which may provide more accurate results.

In another example, the means for sensing at least one other environmental parameter may comprise means, such as an accelerometer, for sensing motion (e.g. vibration) of the conduit. Motion data from the accelerometer may provide an indication that fluid is flowing in the conduit. Thus the motion data may be used to infer the flow of fluid, in addition to temperature.

The means for sensing motion may be connected to a processor, and the means for sensing motion may be arranged to wake up the processor when motion is detected.

The means for sensing at least one other environmental parameter comprises means, such as a microphone, for sensing sound in the conduit. Audio data from the microphone may provide an indication that fluid is flowing in the conduit. Thus the audio data are used to infer the flow of fluid, in addition to temperature.

The means for sensing sound may be connected to a processor, and the means for sensing sound may be arranged to wake up the processor when sound is detected.

As a further example, the at least one other environmental parameter may comprise electromagnetic radiation data. Thus, the means for sensing at least one other environmental parameter may comprise means for sensing electromagnetic radiation (e.g. microwaves, infrared radiation, visible light, and/or ultraviolet radiation). The means for sensing electromagnetic radiation may be connected to a processor, and the means for sensing electromagnetic radiation may be arranged to wake up the processor when a change in electromagnetic radiation is detected.

The apparatus may further comprise means for sensing the resistivity of the conduit, and the means for inferring the flow of fluid may be arranged to infer the flow of fluid based further on the sensed resistivity. The resistivity of the conduit may indicate, for example, whether the conduit is made from a metal or plastic, which in turn may provide an indication of the heat conductivity of the conduit. Since the change in temperature of the conduit with time will depend in part on its heat conductivity, the resistivity of the conduit may be used as an input when inferring the flow of fluid in order to help obtain better results.

The resistivity of the conduit may be sensed, for example, using metal probes. Alternatively the resistivity of the conduit may be known in advance, or preprogrammed into the apparatus.

In another embodiment, the self-capacitance of the conduit may be sensed to determine the conduit material.

The apparatus may further comprise means for determining the size of the conduit, and the means for inferring the flow of fluid may be arranged to infer the flow of fluid based further on the size of the conduit. For example, where the conduit is a pipe, the size of the conduit may be the pipe diameter. The size of the conduit may be set in advance, such as at manufacture or on installation, or may be sensed by a device attached to the conduit. Since the change in temperature of the conduit with time will depend in part on its size, the size of the conduit may be used as an input when inferring the flow of fluid in order to help obtain better results.

The sensing means may be a passive or low energy sensor. This may reduce power consumption and may allow the device to be powered from energy harvesting.

Preferably the sensing means is provided in a sensor device arranged for attachment to the conduit. For example, where the conduit is a pipe, the sensor device may be arranged to clip onto the pipe, or be strapped onto the pipe, or attached in some other way. The sensor device may be end user installable. This may allow a user, for example, to attach the sensor device to pipes which have already been installed.

The sensor device may comprise two (or more) parts: a main body, and a connecting component for connecting the main body to the conduit. The connecting component may comprise, for example, a clip for connecting the main body to a pipe.

In one embodiment, the main body and the connecting component are provided as a single unit.

In another embodiment, the main body is separable from the connecting component. This can allow a standard main body to be connected to a variety of different conduits by selecting the appropriate connecting component. In this case, the main body may comprise at least some of the more complex components such as a sensing means and/or a processor, while the connecting component may comprise a relatively simple and inexpensive connector such as a clip. For example, where the conduit is a pipe, a series of clips may be manufactured to accommodate a variety of standard pipe diameters. This may reduce the overall cost of manufacture.

In either of the above cases, the main body may be rotatable relative to the connecting component. This can allow the position of the main body to be adjusted relative to the conduit, depending on the available space. This may facilitate installation of the sensor device to existing conduits with different space constraints.

The sensor device may comprise a radiation sensor and means for transferring radiation from the conduit to the radiation sensor. By providing means for transferring radiation from the conduit to the radiation sensor, it may be possible to measure radiation in the conduit without the radiation sensor needing to be in direct physical contact with the conduit. This may allow the radiation sensor to be located in the main body, when a two-part sensor device is used. The means for transferring radiation may be, for example, a transfer tube which allows radiation to be transmitted through its centre. The radiation sensor may for example sense infrared radiation in order to produce temperature data.

The sensor device may comprise a vibration sensor (such as an accelerometer) and means for transferring vibration from the conduit to the vibration sensor. By providing means for transferring vibration from the conduit to the vibration sensor, it may be possible to measure vibration in the conduit without the vibration sensor needing to be in direct physical contact with the conduit. This may allow the vibration sensor to be located in the main body, when a two-part sensor device is used. The means for transferring vibration may be, for example, a transfer tube which allows vibration to be transmitted through its body.

In one preferred embodiment, the means for transferring vibration and the means for transferring radiation share a common component. In this case the common component may be a transfer tube. The transfer tube may be, for example, a cylindrical element made from a rigid material such as metal. In this case, vibration may be transmitted through the body of the tube, while radiation may be transmitted through the centre of the tube. Thus, this arrangement may allow both vibration within the conduit and radiation from the conduit to be transferred to components in the sensor device, using a single component. Furthermore, using a transfer tube may allow the main body to be rotatable relative to the connecting component, which may facilitate installation of the sensor device.

Optionally, the transfer tube may also be used to transfer other parameters, such as audio frequencies and/or electrical currents, for example for resistivity measurements.

Where a two-part sensor device is used, the transfer tube preferably passes through a hole in the connecting component, in order to transfer radiation and/or vibration from the conduit to sensors in the main body.

Where a two-part sensor device is used, the connecting component may comprise means for transferring information about the conduit to the main body. For example, information such as pipe diameter and/or pipe material may be transferred to a processor in the main body. This may be achieved through a suitable communication mechanism, such as passive Near Field Communication (NFC) tags embedded in the conduit clip, or a series of depressions and ridges in the conduit clip at the interface between the main body and the conduit clip, or different conduit clip colours, that can be identified by a mechanism, either mechanical or electronic, as a component of the main body. The information about the conduit may be provided as an input to the means for inferring the flow of fluid.

The sensor device may further comprise a heat to electricity converter, such as a Peltier element, which may be arranged to at least partially power the device. This may allow the device to operate without a battery, or may extend the life of the battery.

The sensor device may comprise a transmitter. The transmitter is preferably a wireless transmitter, although wired transmission could be used instead. This may allow the sensor device to pass sensor data to another device for further processing. Preferably the wireless transmitter uses a low power wireless protocol such as Zigbee, 6LowPan, Z-wave, LoRa or Bluetooth Low Energy, although other protocols could be used instead.

In one embodiment, the means for inferring the flow of fluid is provided in the sensor device. This may allow a self-contained device to be provided which may be attached to a conduit such as a pipe, and provide a user with an indication of fluid flow.

In another embodiment, the means for inferring the flow of fluid is provided in a separate concentrator device. For example, the sensor device may be a low power device and/or have a simple processor which is able to give an indication of whether or not fluid is flowing and/or carry out some pre-processing of the sensor data, while the concentrator device may have a more powerful processor which is able to derive a more accurate measure of rate of flow.

Where a separate concentrator device is provided, the sensor device is preferably in communication with the concentrator device, for example using a low power wireless connection. The sensor device may be arranged to transmit any appropriate data, such as environmental data and/or data relating to the conduit to the concentrator device. For example, the sensor device may be arranged to transmit one or more of: temperature of the conduit; ambient temperature adjacent to the sensor device; motion of the conduit; sound in the conduit; vibration of the conduit; electromagnetic radiation emitted by the conduit; resistivity of the conduit; size of the conduit; heat conductivity of the conduit; and conduit material.

The sensor device may be arranged to encrypt environmental data (such as temperature data) and to transmit the encrypted environmental data to the concentrator device. Any other data to be transmitted may also be encrypted.

The sensor device may comprise a processor which is arranged to receive updates from the concentrator device. These updates may include new neural network models and/or algorithms and/or operating code.

The sensor device may be arranged to carry out some pre-processing of the data, such as encoding the data for example using the Fourier series, which may reduce the amount of data which needs to be transmitted.

The concentrator device may be connectable to a plurality of sensor devices. In this case the concentrator device may be arranged to receive temperature data from a plurality of sensor devices, and to infer the flow of fluid in a plurality of conduits based on a change in the temperature data over time for each conduit. This arrangement can allow a plurality of relatively simple, inexpensive and low power sensor devices to be placed on various different conduits in a particular vicinity, while allowing a central concentrator device to carry out more extensive processing. The concentrator may also receive other environmental data and/or data relating to the conduit from the sensor devices, to infer the flow of fluid based at least on part on that data.

The central concentrator device may incorporate other functions such as leak detection, occupancy detection, and freezing and over temperature warning.

The arrangement of a concentrator device connected to a plurality of sensor devices may increase the efficiency and/or reduce the cost of the overall system.

The concentrator device may comprise a neural network model for inferring the flow of fluid, preferably in each of a plurality of conduits. In this case the neural network model may be in any of the forms described above. For example, the neural network model may be arranged to take as an input at least one of: temperature of the conduit; ambient temperature adjacent to the sensor device; motion of the conduit; sound in the conduit; vibration of the conduit; electromagnetic radiation emitted by the conduit; resistivity of the conduit; size of the conduit; heat conductivity of the conduit; and conduit material. Preferably the neural network model is arranged to take a plurality of inputs, and from those inputs synthesise a sensor output. Thus the neural network model may be used to implement a "Virtual Sensor", in this case producing a measure of fluid flow.

Preferably the neural network model is a model which has been pre-trained on reference data, and then loaded onto the concentrator device. By implementing the neural network model on the concentrator device (rather than, for instance, on a separate server or in the cloud) the model becomes an inherent part of the flow sensor function. This may provide various advantages, such as avoiding issues of latency, bandwidth and connectivity. For example, with this arrangement a flow sensor system may be able to infer fluid flow without requiring Internet connectivity.

The concentrator device may comprise a processor, and the concentrator device may be arranged to receive updates for the processor via a network, for example from a cloud service. The updates may include, for example, new neural network models, algorithms and/or operating code for the processor.

The concentrator device may comprise means for communicating with a network such as local area network, a wide area network or the Internet. This may allow flow data to be transmitted to a central server and/or a user device.

The existence of a local neural network, whether as part of the sensor device, or the concentrator device, does not preclude the transfer of the raw environmental data to a cloud server, where it can be used improve trained neural network models, over time.

In one embodiment the conduit is a pipe. However the invention may be used with any type of conduit through which a fluid may flow, for example any type of channel, tube or trough for conveying water or any other fluid. The pipe or other conduit may be may be installed in a building, such as a factory, a commercial building, or a residential building such as an apartment block or a house. However the invention may be used in any desired environment. The fluid may be any type of liquid or gas, for example, water, coolant or oil.

Corresponding methods may also be provided. Thus, according to another aspect of the invention, there is provided a method of detecting flow of a fluid in a conduit as defined by claim 15.

Features of one aspect of the invention may be provided with any other aspect. Apparatus features may be provided with method aspects and vice versa.

Preferred embodiments of the present invention will now be described, purely by way of example, with reference to the accompanying drawings, in which:
Figure 1 shows an example of a sensor device;
Figure 2 shows parts of a sensor device in one embodiment of the invention;
Figure 3 shows parts of a system for monitoring fluid flow;
Figure 4 illustrates parts of a processor in one embodiment of the invention;
Figure 5 shows a representation of a neural network model;
Figure 6 shows various examples of pipe temperature against time;
Figure 7 shows a sensor device in another embodiment of the invention;
Figure 8 shows the sensor device with the clip component detached from the main body;
Figure 9 shows a cross section of a side elevation of the sensor device;
Figure 10 shows a cross section of an end elevation of the sensor device; and
Figure 11 shows a system comprising a plurality of sensor devices and a concentrator device.

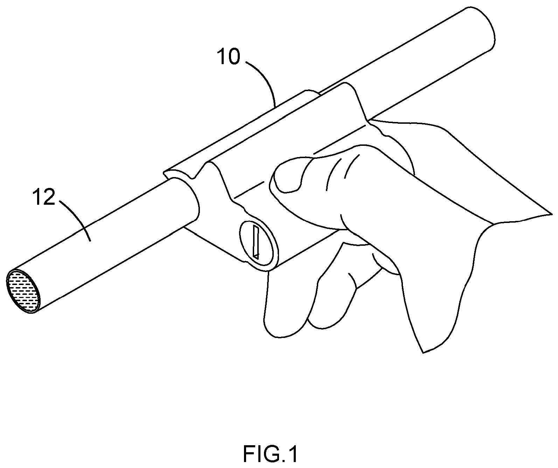

Figure 1 shows an example of a sensor device in one embodiment of the invention. Referring to Figure 1, the sensor device 10 is a multi-function sensor device that captures environmental data, and for example may be clipped onto the pipe 12 in which flow is to be measured. Its principle components may include for example a temperature sensor that measures the external temperature of the pipe, an accelerometer that measures vibration in the pipe, a microphone that measures audio frequencies in the pipe, and an ambient temperature sensor that measures the temperature of the surroundings. The sensor device 10 is user installable, and may be attached to pipes which are already in place. The sensor device may be used in environments such as buildings where it is desired to monitor the flow of liquids such as water in pipes.

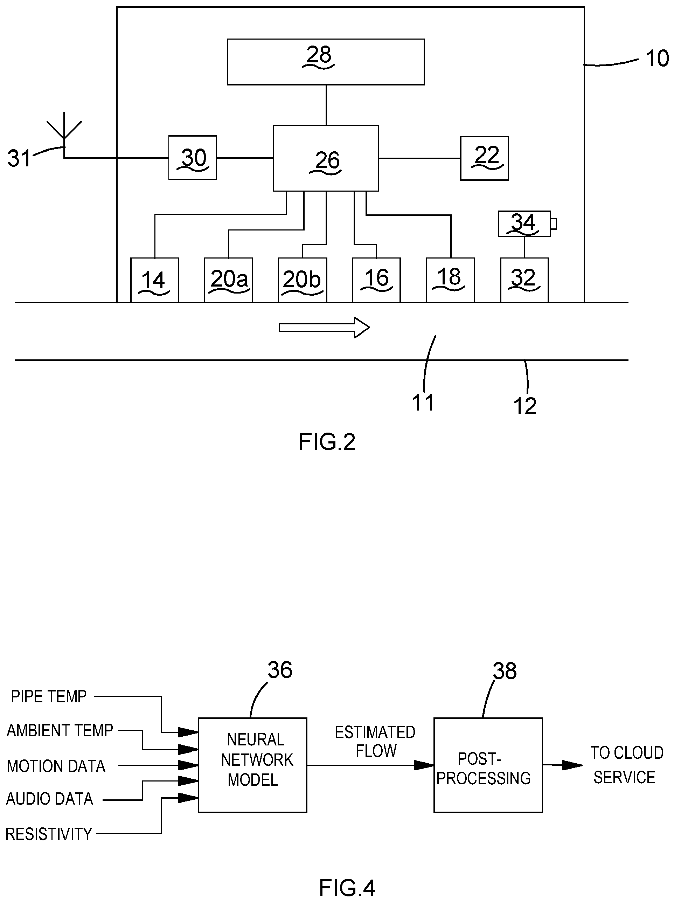

Figure 2 shows parts of a sensor device in one embodiment of the invention. Referring to Figure 2, the sensor device 10 comprises a temperature sensor 14 that measures the external temperature of the pipe, an accelerometer 16 that measures motion in the pipe, and a microphone 18 that measures audio frequencies in the pipe. In this example the temperature sensor is an electrical temperature sensor such as a thermistor. Additionally, the resistivity of the pipe is measured using metallic probes 20a and 20b. Sensors 14 to 20 are all in contact with the pipe 12 through which flow is to be measured. In addition, an ambient temperature sensor 22 measures the temperature of the surroundings. The sensors are preferably passive or low power sensors in order to conserve energy and prolong battery life.

Sensor information from the sensors 14, 16, 18, 20, 22 is passed to a processor 26. The processor 26 comprises a central processing unit (CPU) and associated memory, and is arranged to execute computer code in order to perform functions such as determining fluid flow in the pipe.

Flow may be determined in the pipe by observing changes in the temperature of the pipe. For example, if a tap is turned on, water flowing in the pipe will cause a temperature change and this temperature change over time can be used to infer that water flow is occurring. In addition, a change in vibration or audio data may provide an additional indication that liquid is flowing.

The temperature sensor 14 may have an integrated ADC (analogue-to-digital converter) and may be connected to the processor 26 using a bus such as an I2C (Inter-Integrated Circuit) bus. A typical resolution would be 12-bit, and typical temperature resolution would be 0.0625°C. Temperature measurements need only be made when there is a change in temperature on the pipe. This processing may take place in the temperature sensor 14 itself.

To save power, the processor 26 may enter sleep mode when no data is received. The temperature sensor may wake up the processor 26 on temperature changes. When the processor 26 is alerted of a temperature change, the time at which the change occurred is recorded, together with the amount of change, and in this way a temperature gradient over time is constructed.

The accelerometer 16 is a low power, low-g acceleration sensor which may be connected to the processor 26 for example over an I2C bus. A typical resolution would be 0.98mg, with a maximum frequency response of >8Hz. To save power, the acceleration sensor 16 may wakeup the processor 26 when vibration of interest is detected.

The microphone 18 is a low-power MEMS (micro-electro-mechanical system) microphone. The microphone may be connected to the processor 26 for example on an I2S bus. A typical frequency response would be in the range of 20Hz-20KHz, with a typical sample rate of between 32 and 64kHz and a precision of 16-bits. To save power, the processor 26 may wake up the microphone 18 only when temperature change or vibration change is detected. The samples may be applied to a Discrete Fourier transform (DFT) algorithm via a windowing function, for example a Hamming or Blackman-Harris window. The audio data is thus distributed across a set of frequency bins which may be used to gain extra knowledge about the state of the liquid flow in the pipe.

The processor 26 may also have knowledge of the diameter of the pipe 12 on which the device 10 is fitted. For example, the diameter of the pipe may be preprogrammed into the processor, or may be programmed in when the device is installed, or may be set by a switch on the device, or may be detected by the device.

The processor 26 is connected to a user interface 28. The user interface 28 is arranged to provide information and/or warning signals to a user of the device. For example, the user interface 28 may provide a visual indication of whether fluid is flowing and/or the rate of fluid flow in the pipe, and/or a visual or audible alarm if certain flow conditions are exceeded or not met.

In the arrangement of Figure 2 the processor 26 is also connected to other devices by means of a wireless transmitter module 30 and antenna 31. The module 30 may be for example a LoRa module, a WiFi module, or any other suitable wireless transmission module. The module 30 may also be capable of receiving signals which have been transmitted wirelessly from other devices.

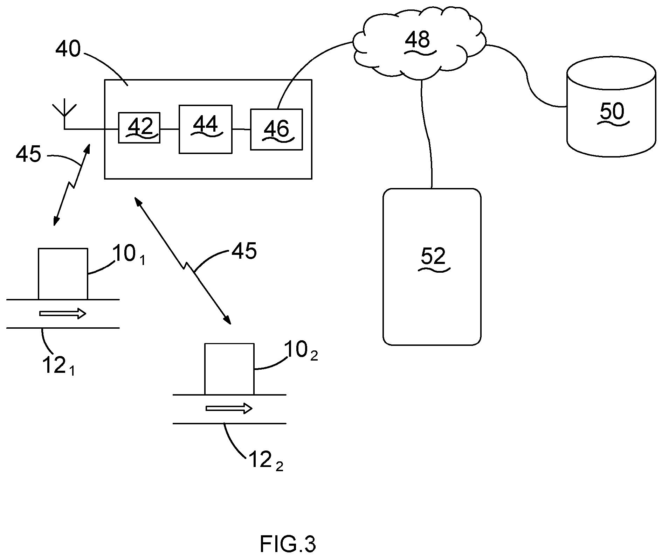

Processor 26 may also receive updates, for example from the concentrator 40 (see Figure 3). These updates may include new models or algorithms or operating code.

Optionally a Peltier element 32 is used to harvest energy from the pipe 12. In this case the Peltier element 32 may be used to recharge a battery 34 which powers the device 10, and/or to power the device directly.

If desired, two or more temperature sensors may be provided in the sensor device 10 to sense the temperature of the pipe 12. This may be done for a variety of reasons, for example: as a means of providing temperature sensor redundancy; to allow self-calibration by comparing the temperatures recorded by each temperature sensor; to allow the accuracy of the temperature reading to be improved by calculating the average temperature recorded by each temperature sensor; or to allow the accuracy of the calculation of flow to be improved by spacing the temperature sensors along the conduit and comparing the temperatures of each sensor over time.

The rate at which the pipe temperature changes over time is a function of the water temperature, ambient temperature, water flow, pipe conductivity and pipe diameter. It follows that the water flow is a function of pipe temperature changes over time, ambient temperature, pipe conductivity, and pipe diameter. All of these parameters are known to the processor 26, and thus the processor is able to use these parameters to infer water flow. This data may be optionally augmented with vibration and audio data.

The processor 26 may be able to infer water temperature based on historical temperature data. For example, if the temperature increases at a slow rate, hot water is flowing at a low rate or the water temperature is only slightly above ambient. However, if the water continues to flow the new pipe temperature will stabilize at the water temperature and when the flow ceases the pipe temperature will return to ambient. Thus the processor is able to infer that the water temperature is the temperature of the pipe when the temperature has stabilized following a period in which the temperature has increased. The processor may also take into account the heat conductivity of the pipe. This may be inferred from the resistivity of the pipe, which may indicate whether the pipe is metal or plastic.

In one embodiment, an algorithm on the processor 26 is used to infer fluid flow. This algorithm may take the form of a function programmed into the processor 26. The algorithm takes as inputs the pipe temperature, ambient temperature, water temperature, pipe conductivity (or resistivity) and pipe diameter, and outputs an estimate of rate of water flow. In another arrangement, the algorithm compares the temperature changes over time to predetermined patterns of temperature change for that particular pipe conductivity, pipe diameter and water temperature which are stored in memory, in order to infer rate of flow. In either case the processor may also augment the temperature data with vibration and/or audio data. For certain applications, a simple flow or no flow indication may be all that is required, but more precision may be obtained by more sophisticated algorithms.

Alternatively or in addition, the multiplicity of sensor information described above may be passed, by means of a low power radio link using wireless module 30, to another more powerful device or concentrator, which is capable of extracting the flow information for one or more sensor devices. In order to reduce the amount of traffic passed over the radio network and thus reduce power consumption, the sensor data from the sensor device may be compressed and sent in discrete blocks at intervals, for example every minute.

Figure 3 shows parts of a system for monitoring fluid flow in another embodiment of the invention. Referring to Figure 3, the system comprises a plurality of sensor devices 10₁, 10₂ each of which is attached to a respective pipe 12₁, 12₂, and a gateway device or concentrator 40. The sensor devices 10₁, 10₂ may be, for example, as shown in Figure 2. The concentrator 40 comprises a wireless receiver module 42, a processor 44, and a wireless Wide Area Network (WAN) module 46. Environmental data from a plurality of sensor devices 10₁, 10₂ are passed, by means of a low power radio link 45, to the concentrator 40. In order to reduce the amount of traffic passed over the radio network and thus reduce power, the sensor data may be compressed for example using a Fourier transform. The concentrator 40 is arranged to handle the processing for multiple sensor devices 10₁, 10₂.

The concentrator 40 may receive updates from the cloud service 48, including for example new neural network models, algorithms or operating code for the processor 44.

The concentrator 40 may also transmit flow data to the cloud service 48 using the wireless module 46. This service maintains a globally available record of the flow state of the sensors, which is maintained in a database 50. The database 50 can be queried at any location from a processing device 52, which may provide a graphical user interface (GUI). Optionally device 52, which may for example be a mobile device, may receive alerts indicating for example a leak detection or over/under temperature condition.

The processor 44 comprises a central processing unit (CPU) and associated memory, and is arranged to execute computer code in order to perform functions such as determining fluid flow in the pipe. In this embodiment the processor 44 may be a more powerful processor which is capable of running a more sophisticated sensor fusion algorithm than the processors in the individual sensor devices.. The concentrator may use an explicit algorithm, for example as described above, in order to infer fluid flow. However, in a preferred embodiment, the processor 44 uses a trained deep recurrent neural network model in order to infer the flow of fluid in a pipe.

A neural network is a network of nodes organised in layers. In a multilayer feed-forward network, each layer of nodes receives inputs from the previous layers. The inputs to each node are combined using a weighted linear combination. The result is then modified by a nonlinear function before being output to the next layer. A backpropagation algorithm is used to calculate the weights in each layer. Neural networks are capable of identifying non-linear patterns, such as temperature change to flow mapping, where there is not a simple one-to-one relationship between the two. Rather, a neural network uncovers the pattern or function linking a number of inputs with a known output. In this case, the algorithm is in the form of hidden nodes within the neural network.

Convolutional neural networks (CNNs) are a class of deep, feed-forward artificial neural network. CNNs are biologically inspired models and have been used for image pattern recognition problems such as hand-written digit recognition and face recognition. They can also be applied to time-series data by use of a windowing mechanism and/or using a variation of the CNN known as a Recurrent Neural Network (RNN). The RNN is a neural network which has not only feedforward networks but also allows recurrent connections. In this way the network is able to refer to previous states and can therefore make use of previous inputs to model new outputs. Details of RNNs can be found in the document "Recurrent Neural Networks - Combination of RNN and CNN" by Lukas Wiest, https://wiki.tum.de/display/lfdv/Recurrent+Neural+Networks+-+Combination+of+RNN+and+CNN.

In one embodiment, the processor 44 may employ a Recursive Neural Network (RNN), or more specifically a Long Short-Term Memory (LSTM) network, which retains a knowledge of previous states of the sensors, in order to infer a flow value from current sensor values. In the latter case, the algorithm is in the form of hidden nodes within a neural network.

The RNN may be pre-trained by providing samples of a multiplicity of sensor data to a neural network together with corresponding flow data. The flow data may be obtained using for example an impeller or ultrasonic based flow sensor and gathered from a large body of test sites.

Figure 4 illustrates parts of the processor 44 in one embodiment of the invention. Referring to Figure 4, the processor in this embodiment comprises neural network model 36 and a post-processing module 38. Environmental data such as pipe temperature, ambient temperature, motion data, audio data and pipe resistivity data are applied to the neural network model 36. The neural network model 36 uses this data to obtain an estimate of the rate of flow of fluid in the pipe. The estimate of fluid flow is passed to post-processing module 38. The post-processing module 38 processes the estimates which have been produced by the neural network model 36, and produces outputs which may be provided to a user and/or sent to cloud service 48.

In embodiments of the present invention the neural network model 36 is a RNN which has been pre-trained on data extracted from a large set of existing environmental sensors. The training process is performed in advance on a separate machine. In order to train the model, data is collected from environmental sensors together with actual flow data obtained from traditional invasive flow sensors. This allows the RNN to learn how the environmental data relates to the actual flow data, and thus generate a model. The model is trained over time such that the outputs of the model match the actual flow data as closely as possible. This training process is computationally intensive, but need only be performed once in order to generate the model. Once the model has been generated, it can be loaded onto other devices such as the processor 44 in the concentrator device 40, or alternatively the processor 26 in the flow sensor device 10. These models may be updated over the WAN and/or radio link 45.

In the present embodiment the environmental data is continuous, and is applied to a sliding window algorithm that slides over the extracted time series data and feeds slices of it to the RNN. The RNN detects flow from the environmental data slices using the pre-trained model.

The environmental data may be encoded, for example using the Fourier series, specifically time-frequency analysis which combines concepts of time and frequency domains. Short-time Fourier transforms (STFT) and Wigner-Vile distributions are known methods which could be used for this. These methods are used to handle non-stationary waveform signals or to inspect trend information over time.

The environmental data may also be encoded using a cryptographic algorithm to prevent unauthorised access to the environmental data

The neural network model runs on the (on premise) concentrator device to avoid issues of communication latency, Wide Area Network bandwidth constraints and other connectivity problems.

Furthermore, by employing low-power radio communication between the sensor device(s) and the concentrator device, flow can continue to be detected even when there is no available Internet- or local WiFi-connectivity.

The enablement of low-power radio communication in the concentrator device also provides the potential of communication with other devices utilising the same low-power radio technology. An example of this is a scenario where an unexpected flow of water is detected by the sensor device and the concentrator device, indicating a burst pipe or leak; which is then communicated to an actuated water isolation valve, which shares the same low-power radio network, to instruct the valve to close, preventing the further loss of water.

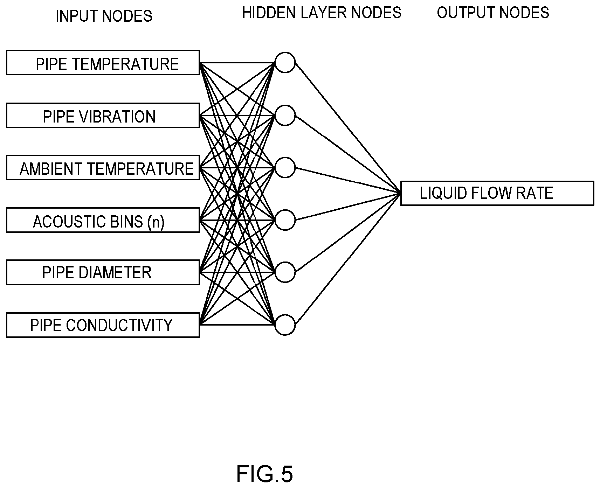

Figure 5 shows a more detailed representation of the neural network model 36. Referring to Figure 5, the neural network consists of an input layer, with a number of nodes that correspond to the different environmental data captured. This data is presented to all of the hidden layer nodes. In a typical implementation there may be six or more input nodes. Unlike a neural network used to recognise for example images, the particular neural network used in this embodiment needs to have knowledge of previous temperature and environmental time-series data samples, in order to make accurate flow predictions. For this reason a Recurrent Neural Network (RNN) may be used and more specifically a Long Short Term Memory (LSTM) network which retains a knowledge of previous states of the sensors in order to infer a flow value from current sensor values.

An LSTM network, is a recurrent neural network that is trained using Backpropagation Through Time and overcomes the vanishing gradient problem because nodes are able to retain data internally in a gated cell. Relative insensitivity to time lags of unknown size and bound between important events typical in time series data gives an advantage to LSTM over alternative RNNs, hidden Markov models and other sequence learning methods. Details of LSTM networks may be found in the document "Long Short-term Memory" by Hochreiter and Schmidhuber, Neural Computation, 9(8):1735-1780, 1997.

The LSTM may be trained by providing samples of a multiplicity of sensor time-series data to the neural network together with corresponding flow time-series data. The flow data may be obtained using for example an impeller or ultrasonic based flow sensor and gathered from a large body of test sites.

LSTMs are sensitive to the scale of the input data, specifically when the sigmoid or tanh activation functions are used. For this reason the data is normalized in the range of 0-to-1.

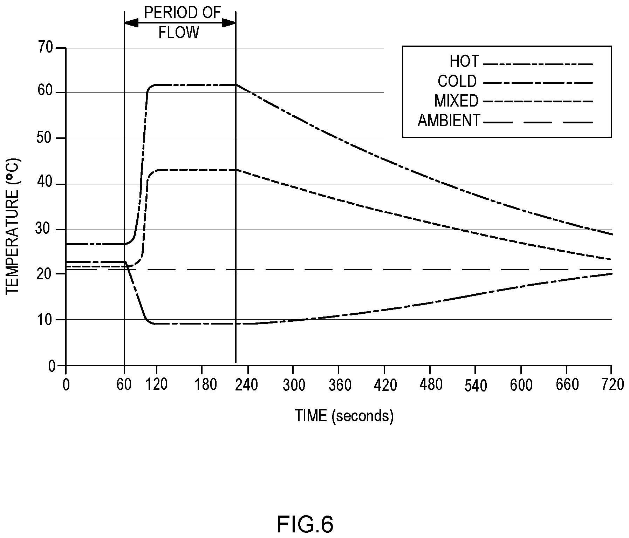

With time series data, the sequence of input values is important, so the sample data from test sites is split into an ordered dataset of train and test datasets, for example in the range 66% training data, 33% test data. The time-series data may become very large, and so is fed into the LSTM in chunks, the size of which is determined by the typical temperature gradient curves (see Figure 6) and the data sample rate. A typical implementation value might be 60 samples assuming a 1 sec sample rate.

The number of hidden layer nodes is carefully selected to avoid underfitting or overfitting which causes loss of generality in the neural network output node. Depending on the training data used, three hidden layers has been found to be a minimum.

The trained model is run on the concentrator processor 44, which is provided with sufficient memory and resources to service a multiplicity of flow sensor nodes 10₁, 10₂.

In the arrangement shown in Figure 3, the environmental data is interpreted by the processor 44 in the gateway device 40. However, in another embodiment of the invention an explicit algorithm running on the processor 26 in the sensor device 10 may be used to detect flow directly as well or instead. For example, a simple flow determination (e.g. flow/no flow) may be made in the sensor device 10, and a more sophisticated flow determination may be made in the gateway device 40.

One possible implementation is that the processor 26 may measure steady-state pipe temperature using the temperature sensor 14. The processor 26 then enters sleep mode and awaits a wakeup signal from the temperature sensor 14 which is generated when the temperature varies from the steady-state.

Figure 6 shows various examples of pipe temperature against time for different water temperatures. As shown in Figure 6, flow activity in the pipe has a direct effect on pipe temperature. For example, if the temperature increases at a slow rate, hot water is flowing at a low rate or the water temperature is only slightly above ambient. If the water continues to flow the new pipe temperature will stabilize at the water flow temperature and when the flow ceases the pipe temperature will return to ambient. By keeping a record of temperature variation over time, processor 26 can thus infer flow activity in the pipe by these changes.

By measuring the rate of change of temperature with respect to time, together with measurements of the current pipe and ambient temperatures, a measurement of the relative flow may be deduced by processor 26. Alternatively, the processor 26 may use a neural network model such as that described above in order to infer the flow of fluid in the pipe.

The system may alert or inform a user directly by means of a warning device, such as an audible alarm, or by connection to another device by means of a radio network using transmitter module 30.

Since pipe temperature is being measured, the same system is also able to provide freeze or over temperature warnings using the above-mentioned mechanism.

The same system may also be used to provide occupancy alerting based on water usage patterns.

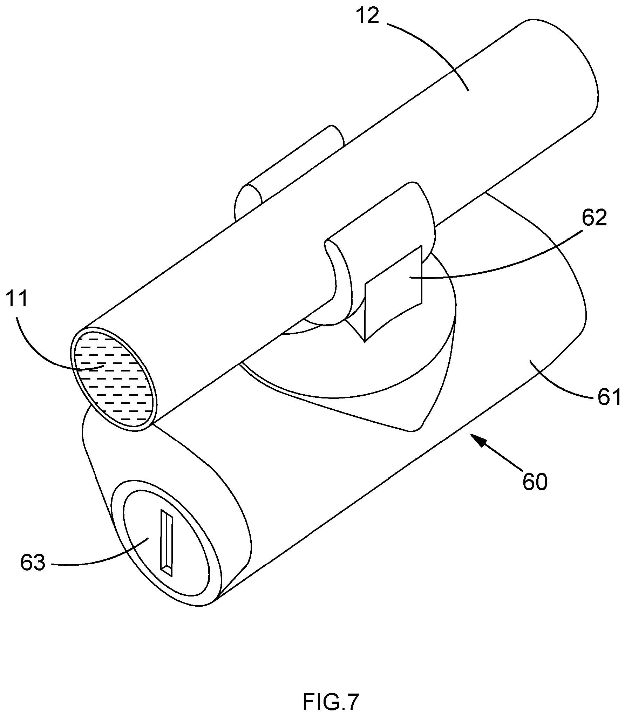

Figure 7 shows a sensor device in another embodiment of the invention. In this embodiment the sensor device 60 consists of two parts: a main body 61 and a clip component 62 which connect together. This can allow the main body 61 to be attached to a range of different types of conduit, by selecting an appropriately sized clip component 62.

In Figure 7, the main body 61 and the clip component 62 are shown connected together. The clip component 62 is clipped onto a pipe 12 in which flow of a liquid 11 is to be measured. The main body 61 is a multi-function sensor device that captures environmental data. The main body 61 may include, for example, an infrared electromagnetic radiation sensor that measures the external temperature of the pipe, an accelerometer that measures vibration in the pipe, and an ambient temperature sensor that measures the temperature of the surroundings. The main body 61 includes an energy source, for example a battery, accessible via a battery chamber cover 63. The sensor device 60 is user installable, and may be attached to pipes which are already in place. The sensor device may be used in environments such as buildings where it is desired to monitor the flow and temperature of liquids such as water in pipes.

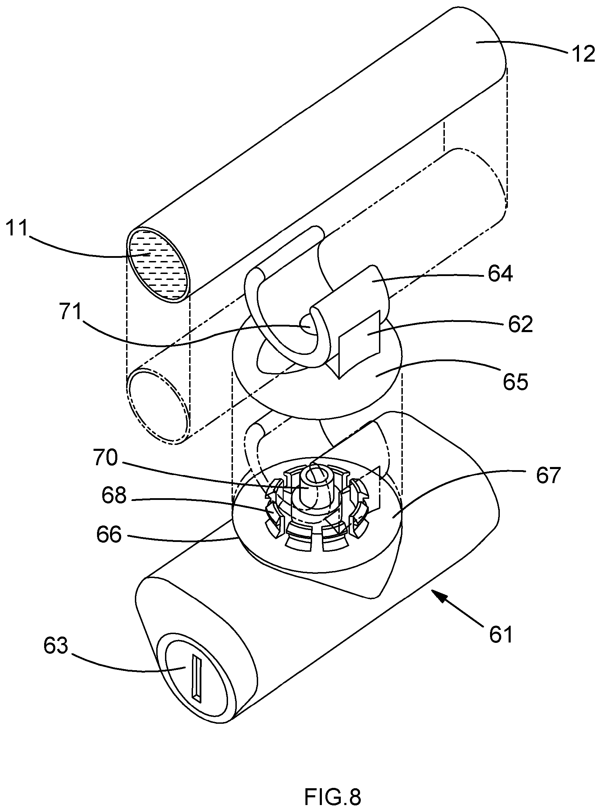

Figure 8 shows the sensor device 60 with the clip component 62 detached from the main body 61 of the device. Referring to Figure 8, the clip component 62 comprises a clip portion 64 and a base portion 65. The clip portion 64 is sized and shaped according to the type of conduit to which it is to be attached. In the arrangement shown, the clip portion 64 is in the form of a partial cylinder which can be snapped into place on the pipe 12. This can allow the clip component 62 to be rotated about the pipe 12 and to be slid axially along the pipe by the user. The clip portion 64 is made from a semi-flexible material, such as a resilient plastics material or any other suitable material. The base portion 65 is arranged to connect the clip component 62 to the main body 61 of the sensor device. The base portion 65 is made from a plastics material, or any other suitable material.

The main body 61 of the sensor device includes an interface portion 66 which is used to connect the main body to the clip component 62. The interface portion 66 includes a flat annular surface 67, and a crown of attachment barbs 68. When the main body 61 and the clip component 62 are brought together, the attachment barbs 68 engage with a corresponding annular lip on the underside of the base portion 65 of the clip component 62. This can allow the main body 61 to rotate freely about the clip component 62. The main body 61 may be made from plastic or any other suitable material.

In the arrangement shown in Figures 7 and 8, the clip component 62 is able to rotate about the pipe 12, and the main body 61 is able to rotate relative to the clip component 62. This can allow the position of the main body 61 relative to the pipe 12 to be adjusted. This can facilitate attachment of the sensor device 60 to pre-installed pipes where space may be limited, by allowing the position of the main body 61 relative to the pipe to be adjusted depending on the available space.

Still referring to Figure 8, the interface portion 66 of the main body 61 includes a transfer tube 70. When the main body 61 is connected to the clip component 62, the transfer tube 70 passes through a corresponding hole 71 in the clip component. In this way, the transfer tube 70 provides a direct mechanical connection between the conduit 12 and components within the main body 61 of the sensor device 60. This enables the transmission of vibration and infrared electromagnetic radiation from the conduit 12 to the main body 61 while still allowing rotation of the main body 61 about the clip component 62. The transfer tube 70 is in the form of a cylinder, and may be made from a metal or any other suitable rigid material which allows the transmission of vibrations.

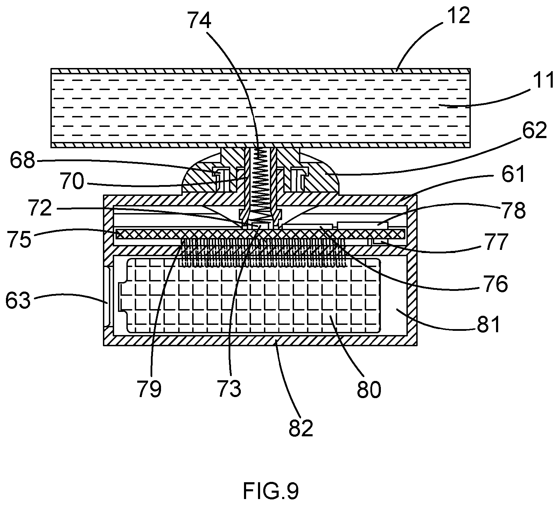

Figure 9 shows a cross section of a side elevation of the sensor device 60, attached to a conduit 12. Referring to Figure 9, the sensor device 60 is clipped onto the conduit 12 by means of the clip component 62. The clip component 62 is attached to the main body 61 of the sensor device 60 by means of the attachment barbs 68. This allows the main body 61 to rotate freely about the clip component 62.

The main body 61 of the sensor device 60 includes an infrared electromagnetic radiation sensor 72 and an accelerometer 73. The infrared electromagnetic radiation sensor 72 may be, for example, a photodetector with a p-n junction that converts infrared radiation into current. The radiation sensor 72 and the accelerometer 73 are both in contact with the transfer tube 70. The transfer tube 70 provides a direct mechanical connection between the conduit 12 and the accelerometer 73, enabling the transmission of vibration from the conduit 12 to the accelerometer 73. Furthermore, the inside of the transfer tube 70 enables the transmission of infrared electromagnetic radiation 74 from the conduit 12 to the infrared electromagnetic radiation sensor 72.

Still referring to Figure 9, the infrared electromagnetic radiation sensor 72 and accelerometer 73 are mounted on printed circuit board 75. In this example, the infrared sensor 72 is mounted on top of the circuit board 75, inside the transfer tube 70. The accelerometer 73 is mounted on the bottom of the circuit board 75, opposite the transfer tube 70. The circuit board 75 is in physical contact with the transfer tube 70, and thus allows vibrations from the transfer tube to be detected by the accelerometer 73. This arrangement can allow vibration within the pipe 12 to be measured by the accelerometer 73, and the temperature of the pipe to be measured by the infrared sensor 72, while still allowing rotation of the main body 61 relative to the clip component 62.

Also mounted on the printed circuit board 75 are a processor 76, an ambient temperature sensor 77, and a low power sub-GHz radio module 78. The processor 76 is arranged to execute computer code in order to perform functions such as pre-processing of the sensor data, or determining fluid flow in the conduit 12. The ambient temperature sensor 77 measures the temperature of the surroundings. The radio module 78 provides a means of communicating with a concentrator device, and is attached to a high-gain antenna 79 enabling the transmission and reception of sub-GHz radio signals. An energy source, for example a battery 80, is contained within a battery chamber 81 accessible via battery chamber cover 63. The various components of the main body 61 are accommodated within a housing 82.

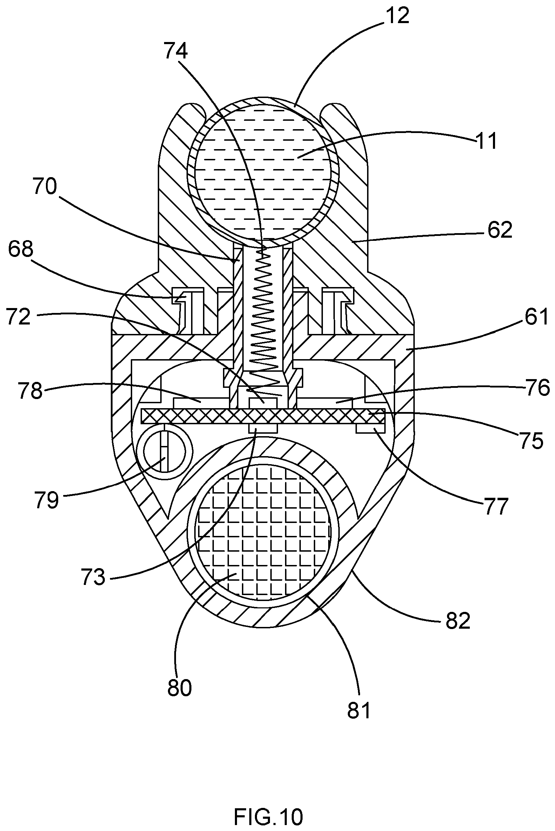

Figure 10 shows a cross section of an end elevation of the sensor device 60 attached to a pipe 12 in which flow of a liquid 11 is to be measured. Referring to Figure 10, the main body 61 comprises infrared electromagnetic radiation sensor 72 that measures the external temperature of the pipe 12, accelerometer 73 that measures vibration in the pipe 12, ambient temperature sensor 77 that measures the temperature of the surroundings, processor 76 arranged to execute computer code in order to perform functions such as pre-processing of the sensor data or determining fluid flow in the conduit 12, low power sub-GHz radio module 78 attached to high-gain antenna 79 enabling the transmission and reception of sub-GHz radio signals; all mounted on a printed circuit board 75; and battery 80, contained within battery chamber 81. The transfer tube 70 provides a direct mechanical connection between the pipe 12 components within the main body 61 of the sensor device, enabling the transmission of vibration and infrared electromagnetic radiation 74 from the pipe 12 to the main body 61.

In the arrangement of Figures 7 to 10, the main body 61 may be arranged to attach to a variety of different clip components 62. For example, where the conduit is a pipe, a series of clip components may be manufactured to accommodate a variety of standard pipe diameters. This can allow a standard main body 61 to be used with a variety of different types of pipe. The clip component is a relatively low-cost component which is relatively easy to manufacture, and thus this arrangement may reduce the overall manufacturing costs.

Each clip component 62 may confer information about the pipe, such as pipe diameter and/or pipe material, to the processor 76 in the main body 61 through a communication mechanism. For example, passive Near Field Communication (NFC) tags may be embedded in the clip component 62, which can be read by an NFC device within the main body 61. Alternatively, a series of depressions and ridges could be provided in the clip components at the interface with the main body. In another example, the clip components may have different colours depending on the type of conduit with which they are to be used, and the main body may be arranged to identify the colour using a simple optical reader. This information may be used in inferring fluid flow. Other possible ways for conferring information will be apparent to the skilled person.

In the arrangement of Figures 7 to 10, an infrared electromagnetic radiation sensor is used to measure the external temperature of the pipe 12. The measurement of infrared radiation emitted by the conduit may provide a more accurate reading of the temperature of the conduit than can be achieved with alternative temperature sensors; similarly the measurement of infrared radiation emitted by the conduit may provide a greater degree of temperature reading precision than can be achieved with alternative temperature sensors; additionally, the measurement of infrared radiation emitted by the conduit may provide a more instantaneous reading of the temperature of the conduit than can be achieved with alternative temperature sensors; also, the measurement of infrared radiation emitted by the conduit does not require physical contact with the conduit, and therefore may provide a more flexible manufacturing arrangement than can be achieved with alternative temperature sensors. Thus the electromagnetic radiation data may be used to infer the flow of fluid, in place of, or in addition to, temperature data provided by other temperature sensors.

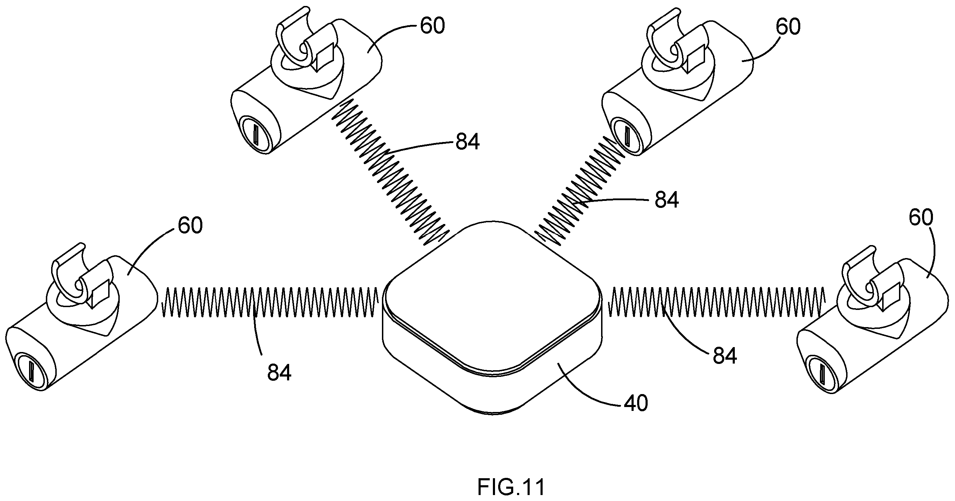

Figure 11 shows a system comprising a plurality of sensor devices 60 and a concentrator device 40 in an embodiment of the invention. The sensor devices 60 may be in the form described above with reference to Figures 7 to 10, while the concentrator device 40 may be in the form described above with reference to Figure 3. Referring to Figure 11, the sensor devices 60 are in bi-directional wireless contact with the concentrator device 40 by means of low-power sub-GHz radio communications links 84. This allows the transmission of sensor data, such as vibration, conduit temperature and ambient temperature, from the sensor devices 60 to the concentrator device 40, and conversely the reception of over-the-air software updates and configuration settings by each sensor device 60 from the concentrator device 40. The radio communications links 84 may use any appropriate wireless technology in order to exchanging data, such as Zigbee, 6LowPan, Z-wave, LoRa or Bluetooth Low Energy.

The concentrator device 40 runs a neural network model in order to infer the flow of fluid in each of the pipes to which the sensor devices 60 are attached. In the present embodiment, the neural network model takes a plurality of disparate sensor inputs, such as conduit temperature, vibration, sound, electromagnetic radiation, resistivity, self-capacitance, conduit diameter, ambient temperature; and from those inputs synthesises a sensor output, in this case being a measure of fluid flow. This 'virtual sensor' reading is sent to the cloud 48 (see Figure 3).

The local 'smart' gateway neural network is capable of processing the data from multiple sensor devices, which increases efficiency and reduces system cost.

In this arrangement, the neural network model used to infer fluid flow is implemented in the local concentrator device 40, rather than in the cloud. The local neural network's function is distinct from a cloud-based solution in that it:
a) is an inherent and inseparable part of the flow sensor function, but for cost and power reasons is not part of the sensor device;
b) takes a number of sensor inputs and synthesises a different type of sensor output (for example, inferring fluid flow from both temperature and vibration); it is this 'virtual sensor' reading that is sent to the cloud;
c) runs on the gateway/concentrator to avoid issues of latency, bandwidth and connectivity; this can allow it, for example, to detect flow when there is no Internet connectivity.

The existence of a local neural network does not however preclude the transfer of the raw environmental data to the cloud where it can be used to improve trained models over time.

Whilst embodiments of the present invention have been described in relation to the flow of water in a pipe, the invention can be applied to any fluids flowing in any conduits. For example, the invention may be used to measure the flow of liquids such as oil or coolant. Whilst the invention has particular application in buildings, it may be used in any environment where it is desired to determine the flow of fluid through a conduit.

## Claims

1. Apparatus for detecting flow of a fluid (11) in a conduit (12), the apparatus comprising:
a sensor device (10; 60) arranged to be attached to the conduit (12), the sensor device comprising means (14) for sensing a temperature of the conduit; and
means for detecting flow of the fluid based on a change in temperature of the conduit over time,
**characterised in that**:
the sensor device further comprises means (18) for sensing sound in the conduit (12);
the means for detecting flow of the fluid comprises a neural network model (36); and
the neural network model (36) is arranged to receive a sensed temperature of the conduit and sensed sound in the conduit, and to infer a rate of flow of fluid in the conduit (12) based on a change in the sensed temperature of the conduit over time and sensed sound in the conduit.

2. Apparatus according to claim 1, wherein the neural network model (36) is pre-trained with data extracted from existing temperature sensors, together with actual flow data.

3. Apparatus according to claim 1 or 2, wherein the neural network model (36) is a Recursive Neural Network or a long short-term memory neural network.

4. Apparatus according to any of the preceding claims, wherein the apparatus is arranged to execute a sliding window algorithm which slides over continuous temperature data and feeds slices of the data to the neural network model.

5. Apparatus according to any of the preceding claims, further comprising means (16, 18, 20, 22) for sensing at least one other environmental parameter, wherein the neural network model (36) is arranged to infer the rate of flow of fluid based further on the sensed environmental parameter.

6. Apparatus according to claim 5, wherein the other environmental parameter is at least one of: ambient temperature; motion of the conduit; vibration of the conduit; and electromagnetic radiation emitted by the conduit.

7. Apparatus according to any of the preceding claims, wherein the neural network model (36) is arranged to infer the flow of fluid based further on at least one parameter of the conduit, wherein the parameter of the conduit is preferably at least one of:
resistivity of the conduit; size of the conduit; heat conductivity of the conduit; and conduit material.

8. Apparatus according to any of the preceding claims, further comprising at least one of: means for sensing the resistivity of the conduit; and means for determining the size of the conduit, wherein the means for inferring the flow of fluid is arranged to infer the flow of fluid based further on the sensed resistivity or the size of the conduit.

9. Apparatus according to any of the preceding claims, wherein the sensor device comprises a main body (61) and a connecting component (62) for connecting the main body to the conduit, wherein the main body is preferably separable from the connecting component.

10. Apparatus according to any of the preceding claims, wherein the sensor device comprises a radiation sensor (72) and a transfer tube (70) for transferring radiation from the conduit to the radiation sensor.

11. Apparatus according to claim 10, wherein the sensor device comprises a vibration sensor (73), and the transfer tube (70) is arranged to transfer vibration from the conduit to the vibration sensor.

12. Apparatus according to any of the preceding claims, wherein the neural network model (36) is provided in the sensor device (10; 60), and the sensor device is in communication with a separate concentrator device (40).

13. Apparatus according to any of the preceding claims, wherein the neural network model (36) is provided in a separate concentrator device (40) in communication with the sensor device (10; 60).

14. Apparatus according to any of the preceding claims, wherein the fluid (11) is water and the conduit (12) is a pipe installed in a building.

15. A method of detecting flow of a fluid (11) in a conduit (12), the method comprising:
sensing a temperature of the conduit using a sensor device (10; 60) attached to the conduit (12); and
detecting flow of the fluid based on a change in temperature of the conduit (12) over time,
**characterised by**:
sensing sound in the conduit using a sensor device (10; 60) attached to the conduit (12);
receiving a sensed temperature of the conduit and sensed sound in the conduit at a neural network model (36); and
using the neural network model (36) to infer a rate of flow of fluid in the conduit (12) based on a change in the sensed temperature of the conduit over time and sensed sound in the conduit.

## Patentansprüche

1. Vorrichtung zum Erkennen des Durchflusses eines Fluids (11) in einer Leitung (12), wobei die Vorrichtung Folgendes beinhaltet:
eine Sensorvorrichtung (10; 60), die zur Anbringung an der Leitung (12) angeordnet ist, wobei die Sensorvorrichtung ein Mittel (14) zum Messen einer Temperatur der Leitung beinhaltet; und
ein Mittel zum Erkennen des Durchflusses des Fluids auf Basis einer Änderung der Temperatur der Leitung im Laufe der Zeit;
**dadurch gekennzeichnet, dass**:
die Sensorvorrichtung ferner ein Mittel (18) zum Messen von Schall in der Leitung (12) beinhaltet;
das Mittel zum Erkennen des Durchflusses des Fluids ein Modell eines neuronalen Netzes (36) beinhaltet; und
das Modell des neuronalen Netzes (36) zum Empfangen einer gemessenen Temperatur der Leitung und eines gemessenen Schalls in der Leitung und zum Ableiten einer Fluiddurchflussrate in der Leitung (12) auf Basis einer Änderung der gemessenen Temperatur der Leitung im Laufe der Zeit und des gemessenen Schalls in der Leitung angeordnet ist.

2. Vorrichtung nach Anspruch 1, wobei das Modell des neuronalen Netzes (36) mit aus bestehenden Temperatursensoren gewonnenen Daten zusammen mit tatsächlichen Durchflussdaten vortrainiert ist.

3. Vorrichtung nach Anspruch 1 oder 2, wobei das Modell des neuronalen Netzes (36) ein rekursives neuronales Netz oder ein neuronales Langzeitgedächtnis- (Long Short-Term Memory, LSTM) -Netz ist.

4. Vorrichtung nach einem der vorhergehenden Ansprüche, wobei die Vorrichtung zum Ausführen eines Schiebefenster-Algorithmus, der über kontinuierliche Temperaturdaten gleitet und Teilmengen der Daten an das Modell des neuronalen Netzes weiterleitet.

5. Vorrichtung nach einem der vorhergehenden Ansprüche, die ferner ein Mittel (16, 18, 20, 22) zum Messen mindestens eines weiteren Umweltparameters beinhaltet, wobei das Modell des neuronalen Netzes (36) zum Ableiten der Fluiddurchflussrate auf Basis des gemessenen Umweltparameters angeordnet ist.

6. Vorrichtung nach Anspruch 5, wobei der andere Umweltparameter mindestens einer der folgenden ist:
Umgebungstemperatur; Bewegung der Leitung; Vibration der Leitung; und von der Leitung emittierte elektromagnetische Strahlung.

7. Vorrichtung nach einem der vorhergehenden Ansprüche, wobei das Modell des neuronalen Netzes (36) zum Ableiten des Fluiddurchflusses ferner auf Basis mindestens eines Parameters der Leitung angeordnet ist, wobei der Parameter der Leitung vorzugsweise mindestens einer der folgenden ist: der spezifische Widerstand der Leitung; die Größe der Leitung; die Wärmeleitfähigkeit der Leitung; und das Leitungsmaterial.

8. Vorrichtung nach einem der vorhergehenden Ansprüche, die ferner mindestens eines der folgenden beinhaltet: ein Mittel zum Messen des spezifischen Widerstands der Leitung; und ein Mittel zum Bestimmen der Größe der Leitung, wobei das Mittel zum Ableiten des Fluiddurchflusses zum Ableiten des Fluiddurchflusses ferner auf Basis des gemessenen spezifischen Widerstands oder der Größe der Leitung angeordnet ist.

9. Vorrichtung nach einem der vorhergehenden Ansprüche, wobei die Sensorvorrichtung einen Hauptkörper (61) und eine Verbindungskomponente (62) zum Verbinden des Hauptkörpers mit der Leitung beinhaltet, wobei der Hauptkörper vorzugsweise von der Verbindungskomponente trennbar ist.

10. Vorrichtung nach einem der vorhergehenden Ansprüche, wobei die Sensorvorrichtung einen Strahlungssensor (72) und eine Übertragungsröhre (70) zum Übertragen von Strahlung von der Leitung zum Strahlungssensor beinhaltet.

11. Vorrichtung nach Anspruch 10, wobei die Sensorvorrichtung einen Vibrationssensor (73) beinhaltet und die Übertragungsröhre (70) zum Übertragen von Vibrationen von der Leitung zum Vibrationssensor angeordnet ist.

12. Vorrichtung nach einem der vorhergehenden Ansprüche, wobei das Modell des neuronalen Netzes (36) in der Sensorvorrichtung (10; 60) bereitgestellt ist und die Sensorvorrichtung mit einer separaten Konzentratorvorrichtung (40) in Kommunikation steht.

13. Vorrichtung nach einem der vorhergehenden Ansprüche, wobei das Modell des neuronalen Netzes (36) in einer separaten Konzentratorvorrichtung (40) bereitgestellt ist, die mit der Sensorvorrichtung (10; 60) in Kommunikation steht.

14. Vorrichtung nach einem der vorhergehenden Ansprüche, wobei das Fluid (11) Wasser ist und die Leitung (12) ein in einem Gebäude verlegtes Rohr ist.

15. Verfahren zum Erkennen des Durchflusses eines Fluids (11) in einer Leitung (12), wobei das Verfahren Folgendes beinhaltet:
Messen einer Temperatur der Leitung unter Verwendung einer Sensorvorrichtung (10; 60), die an der Leitung (12) angebracht ist; und
Erkennen des Durchflusses des Fluids auf Basis einer Änderung der Temperatur der Leitung (12) im Laufe der Zeit;
**gekennzeichnet durch**:
Messen von Schall in der Leitung unter Verwendung einer Sensorvorrichtung (10; 60), die an der Leitung (12) angebracht ist;
Empfangen einer gemessenen Temperatur der Leitung und eines gemessenen Schalls in der Leitung an einem Modell eines neuronalen Netzes (36); und
Verwenden des Modells des neuronalen Netzes (36) zum Ableiten einer Fluiddurchflussrate in der Leitung (12) auf Basis einer Änderung der gemessenen Temperatur der Leitung im Laufe der Zeit und des gemessenen Schalls in der Leitung.

## Revendications

1. Appareil de détection d'un écoulement d'un fluide (11) dans un conduit (12), l'appareil comprenant :
un dispositif capteur (10 ; 60) agencé pour être fixé au conduit (12), le dispositif capteur comprenant un moyen (14) de détection d'une température du conduit ; et
un moyen de détection d'un écoulement du fluide sur la base d'un changement de température du conduit au fil du temps,
**caractérisé en ce que** :
le dispositif capteur comprend en outre un moyen (18) de détection d'un son dans le conduit (12) ;
le moyen de détection d'un écoulement du fluide comprend un modèle de réseau neuronal (36) ; et
le modèle de réseau neuronal (36) est agencé pour recevoir une température détectée du conduit et un son détecté dans le conduit, et déduire un débit d'écoulement de fluide dans le conduit (12) sur la base d'un changement de la température détectée du conduit au fil du temps et du son détecté dans le conduit.

2. Appareil selon la revendication 1, dans lequel le modèle de réseau neuronal (36) est pré-entraîné avec des données extraites de capteurs de température existants, ainsi que des données de débit réel.

3. Appareil selon la revendication 1 ou 2, dans lequel le modèle de réseau neuronal (36) est un réseau neuronal récursif ou un réseau neuronal à mémoire à long et court terme.

4. Appareil selon l'une quelconque des revendications précédentes, l'appareil étant agencé pour exécuter un algorithme de fenêtre glissante qui glisse sur des données de température continues et alimente des tranches des données au modèle de réseau neuronal.

5. Appareil selon l'une quelconque des revendications précédentes, comprenant en outre un moyen (16, 18, 20, 22) de détection d'au moins un autre paramètre environnemental, dans lequel le modèle de réseau neuronal (36) est agencé pour déduire le débit d'écoulement de fluide en fonction en outre du paramètre environnemental détecté.

6. Appareil selon la revendication 5, dans lequel l'autre paramètre environnemental est au moins l'un : d'une température ambiante ; d'un mouvement du conduit ; d'une vibration du conduit ; et d'un rayonnement électromagnétique émis par le conduit.

7. Appareil selon l'une quelconque des revendications précédentes, dans lequel le modèle de réseau neuronal (36) est agencé pour déduire l'écoulement de fluide sur la base d'au moins un paramètre du conduit, dans lequel le paramètre du conduit est de préférence au moins l'un : d'une résistivité du conduit ; d'une taille du conduit ; d'une conductivité thermique du conduit ; et d'un matériau de conduit.

8. Appareil selon l'une quelconque des revendications précédentes, comprenant en outre au moins l'un : d'un moyen de détection de la résistivité du conduit ; et d'un moyen de détermination de la taille du conduit, dans lequel le moyen de déduction de l'écoulement de fluide est agencé pour déduire l'écoulement de fluide sur la base en outre de la résistivité détectée ou de la taille du conduit.

9. Appareil selon l'une quelconque des revendications précédentes, dans lequel le dispositif capteur comprend un corps principal (61) et un composant de connexion (62) pour connecter le corps principal au conduit, dans lequel le corps principal est de préférence séparable du composant de connexion.

10. Appareil selon l'une quelconque des revendications précédentes, dans lequel le dispositif capteur comprend un capteur de rayonnement (72) et un tube de transfert (70) pour transférer le rayonnement du conduit au capteur de rayonnement.

11. Appareil selon la revendication 10, dans lequel le dispositif capteur comprend un capteur de vibration (73), et le tube de transfert (70) est agencé pour transférer des vibrations du conduit vers le capteur de vibration.

12. Appareil selon l'une quelconque des revendications précédentes, dans lequel le modèle de réseau neuronal (36) est fourni dans le dispositif capteur (10 ; 60), et le dispositif capteur est en communication avec un dispositif concentrateur séparé (40).

13. Appareil selon l'une quelconque des revendications précédentes, dans lequel le modèle de réseau neuronal (36) est fourni dans un dispositif concentrateur séparé (40) en communication avec le dispositif capteur (10 ; 60).

14. Appareil selon l'une quelconque des revendications précédentes, dans lequel le fluide (11) est de l'eau et le conduit (12) est un tuyau installé dans un bâtiment.

15. Procédé de détection d'un écoulement d'un fluide (11) dans un conduit (12), le procédé comprenant :
la détection d'une température du conduit à l'aide d'un dispositif capteur (10 ; 60) fixé au conduit (12) ; et
la détection d'un écoulement du fluide sur la base d'un changement de température du conduit (12) au fil du temps,
**caractérisé par** :
la détection de son dans le conduit à l'aide d'un dispositif capteur (10 ; 60) fixé au conduit (12) ;
la réception d'une température détectée du conduit et d'un son détecté dans le conduit au niveau d'un modèle de réseau neuronal (36) ; et
l'utilisation du modèle de réseau neuronal (36) pour déduire un débit d'écoulement de fluide dans le conduit (12) sur la base d'un changement de la température détectée du conduit au fil du temps et du son détecté dans le conduit.
